# EUROPEAN PATENT APPLICATION

(11) **EP 4 685 527 A1**
(43) Date of publication of application: **28.01.2026**
(21) Application number: 25191175.6
(22) Date of filing: 23.07.2025
(51) Int. Cl.: G01T 1/24

(54) **X-RAY DETECTOR**

(30) Priority: 25.07.2024 US 202463675462 P; 25.07.2024 US 202463675487 P; 13.11.2024 KR 20240161307; 13.11.2024 KR 20240161308
(71) Applicant: Rayence Co., Ltd., Hwaseong-si, Gyeonggi-do 18449 (KR); Vatech Ewoo Holdings Co., Ltd., Hwaseong-si, Gyeonggi-do 18449 (KR); Qpix solutions Inc., Morrisville, NC 27560 (US)
(72) Inventor: KIM, Jung Do, 18449 Hwaseong-si (KR); YUN, Seung Man, Morrisville, 27560 (US); LEE, Jin Seong, 18449 Hwaseong-si (KR); HA, Yun U, 18449 Hwaseong-si (KR)
(74) Representative: Lorenz & Kollegen

(57) **Abstract**

Proposed is an X-ray detector. The X-ray detector includes a detector module including a sensor assembly in which a photoconductive layer formed of perovskite is formed, a case providing a space in which the detector module is positioned and including at least one metal layer, and a desiccant filling an internal space of the case in a state in which the detector module is accommodated in the case.

## Description

### CROSS REFERENCE TO RELATED APPLICATION

The present application claims priority to US Patent Application No. 63/675,462, filed on July 25, 2024, US Patent Application No. 63/675,487, filed on July 25, 2024, Korea patent Application No. 10-2024-0161307, filed on November 13, 2024, and Korea Patent Application No. 10-2024-0161308, filed on November 13, 2024, the entire contents of which are incorporated herein for all purposes by this reference.

### BACKGROUND

### Technical Field

The present disclosure relates to an X-ray detector.

### Description of the Related Art

In recent years, a digital detector has become widely used for X-ray imaging.

An X-ray detector may experience performance degradation when moisture and so on penetrate into an inner portion of the X-ray detector. In order to prevent such performance degradation, a sealing structure is applied, but there is a problem that the existing sealing structure does not have sufficient moisture prevention characteristics.

### SUMMARY

Accordingly, the present disclosure has been made keeping in mind the above problems occurring in the related art, and an objective of the present disclosure is to provide an X-ray detector having a sealing structure capable of effectively preventing moisture penetration.

In order to achieve the objective of the present disclosure, according to an aspect of the present disclosure, there is provided an X-ray detector including: a detector module including a sensor assembly in which a photoconductive layer formed of perovskite is formed; a case providing a space in which the detector module is positioned and including at least one metal layer; and a desiccant filling an internal space of the case in a state in which the detector module is accommodated in the case.

The case may include a first case positioned at a front side and a second case positioned at a rear side, and each of the first and second cases may include at least one metal layer.

A thickness of the metal layer may be equal to or more than 0.1 mm and equal to or less than 1 mm.

The metal layer may be formed of at least one selected from aluminum, magnesium, and titanium, or may be formed of an alloy thereof.

Each of the first and second cases may further include a plastic layer.

The X-ray detector may further include a protective sleeve formed along a side surface of the detector module.

The protective sleeve may include a step portion, and an upper surface of the step portion may be positioned corresponding to a coupling surface where the first case and the second case are coupled to each other.

The X-ray detector may further include a sealing material applied to a space of a coupling surface between the first case and the second case.

The sealing material may be formed of a resin including epoxy.

The detector module may be seated on an inner floor surface of the first case, and the desiccant may be positioned at a lateral side and a rear side of the detector module.

The desiccant may have a porous structure.

In the X-ray detector according to the present disclosure, the protective sleeve is formed along the side surface of the detector module provided with the photoconductive layer vulnerable to moisture, and the sealing material is applied to the upper surface of the protective sleeve, so that the sealing material is introduced into the space of the coupling surface between the front case and the rear case and the space is filled with the sealing material. Therefore, as the front case and the rear case are solidly coupled to each other by the sealing material, the inner portion of the case may be sealed and the detector module may be coupled to and fixed to the case.

Furthermore, the space inside the case in which the detector module is accommodated may be filled with the desiccant.

As such, since the moisture-proof and dehumidification structure for the photoconductive layer to be prevented from moisture penetration is provided in the X-ray detector, moisture penetration into the photoconductive layer may be prevented at a very high level.

Therefore, the X-ray detector has the sealing structure that effectively prevents moisture penetration, thereby maximizing the yield rate.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a cross-sectional view schematically illustrating a configuration of an X-ray detector according to an embodiment of the present disclosure;
FIG. 2 and FIG. 3 are cross-sectional views schematically illustrating a manufacturing process of the X-ray detector according to an embodiment of the present disclosure; and
FIG. 4 is a cross-sectional view schematically illustrating a configuration of the X-ray detector according to another embodiment of the present disclosure.

### DETAILED DESCRIPTION

Hereinafter, an embodiment of the present disclosure will be described in detail with reference to the drawings.

### [First embodiment]

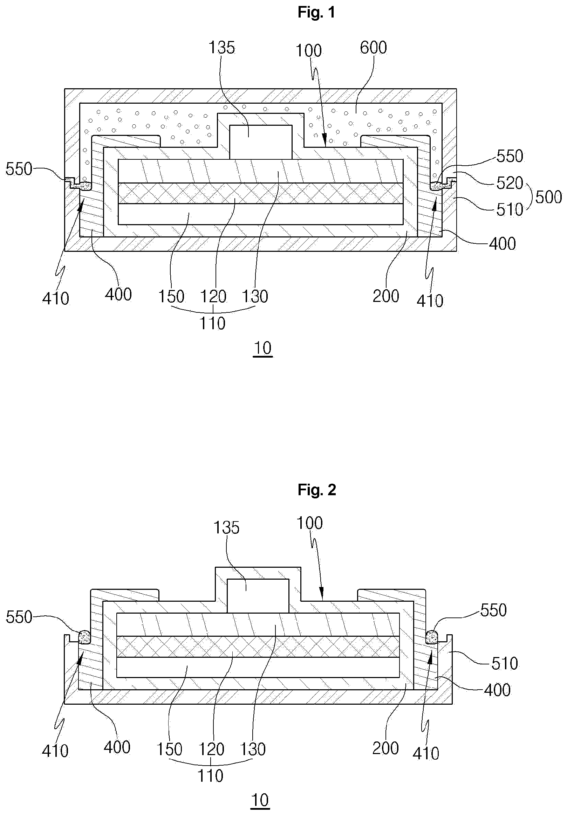

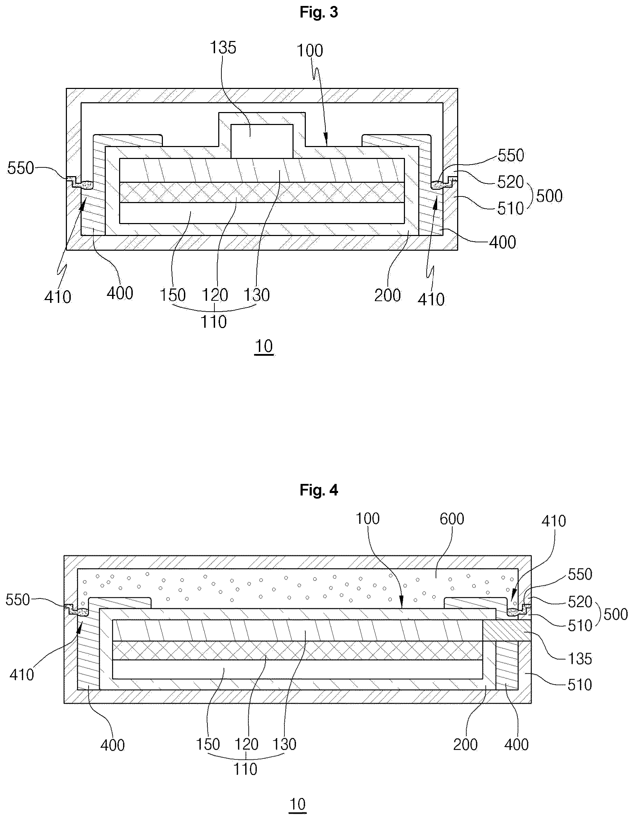

FIG. 1 is a cross-sectional view schematically illustrating a configuration of an X-ray detector according to an embodiment of the present disclosure. FIG. 2 and FIG. 3 are cross-sectional views illustrating a manufacturing process of the X-ray detector according to an embodiment of the present disclosure, wherein FIG. 2 is a view illustrating a state in which a detector module is seated on a front case and a sealing material is applied on a protective sleeve and FIG. 3 is a view illustrating a state in which a rear case is coupled to the front case.

An X-ray detector 10 according to the present embodiment may be an intraoral sensor for dental intraoral X-ray imaging. The X-ray detector 10 according to the present embodiment may be configured to generate an image signal for an X-ray image of intraoral structures such as teeth and so on by detecting X-rays emitted from an X-ray imaging apparatus outside the oral cavity while the X-ray detector 10 is inserted into the oral cavity of a subject. Referring to FIGS. 1 to 3, the X-ray detector 10 according to the present embodiment may be configured as a direct conversion type X-ray detector that directly detects incident X-rays and converts the incident X-rays into electrical signals.

The X-ray detector 10 may include a detector module (or a sensor module) 100, a protective sleeve 400, and a case (or an outer case) 500.

Here, the detector module 100 may include a sensor assembly 110, and may include a sealing member 200 sealing the sensor assembly 110.

First, the sensor assembly 110 may include a sensor substrate 120, a photoconductive layer (or a photoelectric material layer) 150, and a driving circuit board 130.

As such, the X-ray detector 10 of the present embodiment may be provided with the photoconductive layer 150 that directly detects X-rays and generates electrical signals.

Such a photoconductive layer 150 may be formed on a front surface (or an upper surface) of the sensor substrate 120, and may be formed of, for example, perovskite, but is not limited thereto.

Meanwhile, although not specifically illustrated, a lower electrode may be formed for each pixel unit under the photoconductive layer 150. In addition, an upper electrode to which a bias voltage is applied may be formed on the photoconductive layer 150.

Meanwhile, the sensor substrate 120 may be formed of a CMOS substrate or a TFT substrate.

The driving circuit board 130 may be disposed at a rear side of the sensor substrate 120. In other words, the sensor substrate 120 may be positioned on a side opposite to the photoconductive layer 150 with the sensor substrate 120 interposed therebetween. A driving circuit for driving the sensor substrate 120 may be mounted on such a driving circuit board 130.

Meanwhile, a connector 135 for connection with an external system circuit may be mounted on the driving circuit board 130. A cable may be connected to such a connector 135, and electrical connection with the external system circuit may be realized through the cable.

As described above, the sensor assembly 110 of the present embodiment may be configured as a stacked structure in which the driving circuit board 130, the sensor substrate 120, and the photoconductive layer 150 are stacked.

Meanwhile, although not specifically illustrated, the photoconductive layer 150 of the sensor assembly 110 may be configured such that substantially the entire outer surface of the photoconductive layer 150 is covered with a sealant. When the sealant is formed as described above, moisture penetration into an inner portion of photoconductive layer 150 may be prevented.

The sensor assembly 110 configured as described above may be configured to be sealed by the sealing member 200.

In this regard, for example, the sensor assembly 110 may be configured such that substantially the entire outer surface of the sensor assembly 110 is wrapped and sealed by the sealing member 200.

Such a sealing member 200 may include a waterproof material (or a moisture-proof material) such as parylene, silicone, or epoxy, but is not limited thereto.

Meanwhile, the sealing member 200 may be formed as a single layer or multiple layers.

The sealing member 200 and the sensor assembly 110 as described above may constitute the detector module 100.

The detector module 100 may be encased in the case 500.

In this regard, the case 500 may be formed of a front case (or a first case) 510 positioned at a front side to which X-rays are emitted and a rear case (or a second case) 520. The front case 510 and the rear case 520 are coupled to each other, so that an accommodating space may be provided inside the case 500.

The detector module 100 may be inserted into and accommodated in the accommodating space inside the case 500.

In this regard, for example, as illustrated in FIG. 2, the detector module 100 may be seated on an inner floor surface of the front case 510. Then, as illustrated in FIG. 3, the rear case 520 may cover the detector module 100 and may be coupled to the front case 510. More specifically, a front surface of the detector module 100 may be in close contact with the inner floor surface of the front case 510.

Here, in order to couple the front case 510 and the rear case 520 to be solidly fixed to each other and to seal the inner portion of the case 500, the protective sleeve 400 and a sealing material (or a coupling material) 550 may be used.

In this regard, for example, the protective sleeve 400 may be formed such that the protective sleeve 400 surrounds a side surface of the detector module 100. That is, the protective sleeve 400 may be formed along a circumference of the side surface of the detector module 100 and may surround the side surface of the detector module 100. Furthermore, the protective sleeve 400 may be formed such that the protective sleeve 400 may cover at least a portion of the rear side of the detector module 100.

The protective sleeve 400 formed as described above may be formed such that the protective sleeve 400 has a step portion 410 on the side surface of the detector module 100. In this regard, for example, on the side surface of the detector module 100, a lower portion of the protective sleeve 400 may protrude outwardly compared to an upper portion of the protective sleeve 400 so that the step portion 410 having a stepped structure may be formed on the protective sleeve 400.

Such a step portion 410 may be positioned such that the upper surface of the step portion 410 is positioned corresponding to a coupling portion (or a coupling surface) where the front case 510 and the rear case 520 are coupled to each other. More specifically, the upper surface of the step portion 410 may be positioned lower than the position of the coupling portion (or the coupling surface) where the front case 510 and the rear case 520 are coupled to each other.

Here, for example, the protective sleeve 400 may be formed of a resin such as silicone as a waterproof material, but is not limited thereto.

The upper surface of the step portion 410 of such a protective sleeve 400 serves as a seating surface for the sealing material 550, and the sealing material 550 may be applied to the upper surface of the step portion 410.

Here, the sealing material 550 may be formed of a resin including epoxy as a waterproof material, but is not limited thereto.

As illustrated in FIG. 2 and FIG. 3, in a state in which the sealing material 550 is applied to the upper surface of the step portion 410, when the rear case 520 is coupled to the front case 510, the sealing material 550 may be introduced into a space of the coupling surface between the front case 510 and the rear case 520 so that the space is filled with the sealing material 550. After that, by performing a curing process, the sealing material 550 may be cured.

Accordingly, by filling the space of the coupling surface between the front case 510 and the rear case 520 with the sealing material 550, the inner portion of the case 500 may be sealed while the front case 510 and the rear case 520 are coupled to each other.

In addition, since the sealing material 550 is applied and cured such that the sealing material 550 is in contact with the detector module 100, the protective sleeve 400, and the case 500, the detector module 100 may be coupled to and fixed to the case 500.

Meanwhile, the accommodating space inside the case 500 in which the detector module 100 is seated may be filled with a desiccant 600. More specifically, among the accommodating space inside the case 500, a space other than a space where the detector module 100, the protective sleeve 400, and the sealing material 550 are positioned may be filled with the desiccant 600.

In this situation, the desiccant 600 is substantially positioned at the lateral side and the rear side of the detector module 100, and is not positioned at the front side of the detector module 100. Accordingly, the desiccant 600 does not block a light-receiving region (or an active region) of the front side of the sensor assembly 110 of the detector module 100, so that interference with X-ray sensing of the sensor assembly 110 by the desiccant 600 may be prevented.

For example, the desiccant 600 may have a porous structure. When the desiccant 600 has such a porous structure, dehumidification characteristics of the desiccant 600 may be increased.

For example, such a desiccant 600 may be formed of a polymer compound including silica gel, aluminosilicate, calcium sulfate, calcium chloride, and so on, but is not limited thereto.

Meanwhile, the case 500, i.e., each of the front case 510 and the rear case 520, may be configured as a single-layer structure or a multi-layer structure including at least one metal layer.

Here, for example, the metal layer forming the case 500 may include at least one selected from aluminum, magnesium, and titanium, or may include an alloy thereof. As such, when the case 500 is formed such that the case 500 has the metal layer, substantially permanent moisture prevention characteristics may be secured.

For example, a thickness of the metal layer forming the case 500 may be 0.1 mm or more and 0.4 mm or less (i.e., 0.1 mm to 0.4 mm), and may preferably be 0.25 mm or more and 0.35 mm or less. When the metal layer is formed such that the thickness of the metal layer is within the thickness range as described above, the thickness of the case 500 may be substantially minimized while the moisture prevention characteristics are sufficiently secured.

Assuming that the X-ray detector according to the present embodiment is a compact intraoral sensor, the thickness of the metal layer is required to be at least 0.1 mm so as to secure the desired moisture prevention characteristics, and the thickness of the metal layer is required to be 0.4 mm or less so as to avoid unnecessary increases in volume and weight of the X-ray detector. In addition, when the case 500 is formed as a multi-layer structure, the case 500 may include a polymer layer such as plastic along with the metal layer.

As described above, in the X-ray detector of the present embodiment, the protective sleeve is formed along the side surface of the detector module provided with the photoconductive layer vulnerable to moisture, and the sealing material is applied to the upper surface of the step portion of the protective sleeve, so that the sealing material is introduced into the space of the coupling surface between the front case and the rear case and the space is filled with the sealing material. Therefore, as the front case and the rear case are solidly coupled to each other by the sealing material, the inner portion of the case may be sealed and the detector module may be coupled to and fixed to the case.

Furthermore, the space inside the case in which the detector module is accommodated may be filled with the desiccant.

As such, since the moisture-proof and dehumidification structure for the photoconductive layer to be prevented from moisture penetration is provided in the X-ray detector, moisture penetration into the photoconductive layer may be prevented at a very high level.

Therefore, the X-ray detector has the sealing structure that effectively prevents moisture penetration, thereby maximizing the yield rate.

### [Second embodiment]

FIG. 4 is a cross-sectional view schematically illustrating a configuration of the X-ray detector according to another embodiment of the present disclosure.

The X-ray detector according to another embodiment of the present disclosure may be configured for X-ray imaging in various fields such as industrial, dental, and medical applications. The X-ray detector according to another embodiment of the present disclosure may be positioned to face an X-ray generating apparatus with a subject interposed therebetween and may be configured to generate an image signal for an X-ray image of a subject by detecting X-rays which are emitted from the X-ray generating apparatus and which penetrate through the subject. For this purpose, the X-ray detector according to another embodiment of the present disclosure may represent an independent configuration or may be installed in equipment for X-ray imaging in corresponding fields such as industrial, dental, and medical applications.

In addition, in FIG. 4, the same reference numerals are assigned to the same components that perform the same functions as those in the embodiment previously described with reference to FIG. 1 to FIG. 3, so that duplicate descriptions are omitted and differences are mainly discussed.

In the X-ray detector according to another embodiment of the present disclosure, the connector 135 for connection with an external system circuit may be exposed to a first side surface of the case 500 through the side surface of the protective sleeve 400. Alternatively, the connector 135 may be omitted, and a wireless communication module (not illustrated) may be mounted on the driving circuit board 130 or the like so that the wireless communication module is wirelessly connected to the external system circuit.

Other aspects of another embodiment of the present disclosure may be the same as the previous embodiment.

That is, the X-ray detector according to another embodiment of the present disclosure may include the detector module 100 including the sensor assembly 110 having the photoconductive layer 150 formed of perovskite, the case 500 which provides the space where the detector module 100 is positioned and which includes at least one metal layer, and the desiccant 600 that fills the space inside the case 500 in a state in which the detector module 100 is accommodated in the case 500.

The case 500 may include the first case 510 provided at the front side and the second case 520 provided at the rear side, and each of the first and second cases 510 and 520 may include at least one metal layer.

The metal layer may have a thickness of 0.1 mm or more and 1 mm or less.

Considering that the X-ray detector according to another embodiment of the present disclosure is relatively large compared to the X-ray detector of the previous embodiment and may be exposed to various environments, the thickness of the metal layer is required to be at least 0.1 mm so as to secure the desired moisture prevention characteristics. Furthermore, when the thickness of the metal layer exceeds 1 mm, the volume and the weight of the metal layer increase unnecessarily while no improvement in moisture prevention characteristics may be expected.

The metal layer may be formed of at least one selected from aluminum, magnesium, and titanium, or may be formed of an alloy thereof.

Each of the first and second cases 510 and 520 may further include a plastic layer.

The X-ray detector of another embodiment of the present disclosure may further include the protective sleeve 400 formed along the side surface of the detector module 100.

The protective sleeve 400 includes the step portion 410, and the upper surface of the step portion 410 may be positioned corresponding to the coupling surface where the first case 510 and the second case 520 are coupled to each other.

The sealing material 550 applied to the upper surface of the step portion 410 and configured to fill the space of the coupling surface between the first case 510 and the second case 520 may be further included.

The sealing material 550 may be formed of a resin including epoxy.

The detector module 100 is seated on the inner floor surface of the first case 510, and the desiccant 600 may be positioned at the lateral side and the rear side of the detector module 100.

The desiccant 600 may have a porous structure.

The above-described embodiment of the present disclosure is an example of the present disclosure, and free modification is possible within the scope included in the spirit of the present disclosure. Accordingly, the present disclosure includes modifications of the present disclosure within the scope of the appended claims and the equivalents thereof.

## Claims

1. An X-ray detector comprising:
a detector module comprising a sensor assembly in which a photoconductive layer formed of perovskite is formed;
a case providing a space in which the detector module is positioned and comprising at least one metal layer; and
a desiccant filling an internal space of the case in a state in which the detector module is accommodated in the case.

2. The X-ray detector of claim 1, wherein the case comprises a first case positioned at a front side and a second case positioned at a rear side, and each of the first and second cases comprises at least one metal layer.

3. The X-ray detector of claim 2, wherein a thickness of the metal layer is equal to or more than 0.1 mm and equal to or less than 1 mm.

4. The X-ray detector of claim 2, wherein the metal layer is formed of at least one selected from aluminum, magnesium, and titanium, or is formed of an alloy thereof.

5. The X-ray detector of claim 2, wherein each of the first and second cases further comprises a plastic layer.

6. The X-ray detector of claim 2, further comprising:
a protective sleeve formed along a side surface of the detector module.

7. The X-ray detector of claim 6, wherein the protective sleeve comprises a step portion, and an upper surface of the step portion is positioned corresponding to a coupling surface where the first case and the second case are coupled to each other.

8. The X-ray detector of claim 7, further comprising:
a sealing material applied to a space of a coupling surface between the first case and the second case.

9. The X-ray detector of claim 8, wherein the sealing material is formed of a resin comprising epoxy.

10. The X-ray detector of claim 2, wherein the detector module is seated on an inner floor surface of the first case, and the desiccant is positioned at a lateral side and a rear side of the detector module.

11. The X-ray detector of claim 1, wherein the desiccant has a porous structure.

12. The X-ray detector of claim 1, wherein a thickness of the metal layer is equal to or more than 0.1 mm and equal to or less than 0.4 mm, and the X-ray detector is an intraoral sensor for X-ray imaging in an oral cavity.
